# EUROPEAN PATENT APPLICATION

(11) **EP 4 811 027 A1**
(43) Date of publication of application: **23.09.2026**
(21) Application number: 26165377.8
(22) Date of filing: 17.03.2026
(51) Int. Cl.: G02F 1/1337

(54) **METHOD FOR MANUFACTURING INORGANIC ALIGNMENT FILM, LIQUID CRYSTAL APPARATUS, AND ELECTRO-OPTICAL APPARATUS**

(30) Priority: 19.03.2025 JP 2025044578
(71) Applicant: Seiko Epson Corporation, Tokyo 160-8801 (JP)
(72) Inventor: ISHIKAWA, Tomoya, Suwa-shi, 392-8502 (JP)
(74) Representative: Lewis Silkin LLP

(57) **Abstract**

A method for manufacturing an inorganic alignment film includes a first step of forming pixel electrodes at a substrate; a second step of forming a first film by vapor deposition so as to cover the substrate and the pixel electrodes, the first film having multiple first columns each having a major axis direction being a direction along a Z-axis; a third step of forming a second film on the multiple first columns by vapor deposition, the second film having multiple second columns each having a major axis direction that intersects at a first angle with the direction along the Z-axis; a fourth step of forming a protective film on the multiple second columns by atomic deposition; and a fifth step of forming a third film on the protective film by vapor deposition, the third film having multiple third columns each having a major axis direction inclining by a second angle smaller than the first angle with respect to the direction along the Z-axis, the third film being thinner than the second film.

## Description

The present application is based on, and claims priority from JP Application Serial Number 2025-044578, filed March 19, 2025, the disclosure of which is hereby incorporated by reference herein in its entirety.

### BACKGROUND

### 1. Technical Field

The present disclosure relates to a method for manufacturing an inorganic alignment film, a liquid crystal apparatus, and an electro-optical apparatus.

### 2. Related Art

An electro-optical apparatus such as a projector including a liquid crystal apparatus is known in related art. In such an electro-optical apparatus, an inorganic alignment film tends to be used in a liquid crystal apparatus because the density of a luminous flux incident on the liquid crystal apparatus is higher than that of a luminous flux incident on a direct-view liquid crystal apparatus. In particular, to cope with a higher-luminance light source for projection mapping and other applications, studies on further improvement of an inorganic alignment film are underway. For example, JP-A-2018-132578 discloses a liquid crystal apparatus in which an inorganic alignment film is coated with a metal oxide film.

JP-A-2018-132578 is an example of the related art.

The liquid crystal apparatus disclosed in JP-A-2018-132578, however, has a problem of a possible decrease in the liquid crystal alignment capability of the inorganic alignment film. In detail, the metal oxide film, which covers the inorganic alignment film, may make it difficult for the inorganic alignment film to show its original liquid crystal alignment capability.

When the inorganic alignment film is not covered with the metal oxide film, there is another problem of possible alteration of the liquid crystal material. In detail, the inorganic alignment film is configured with multiple columnar bodies formed by oblique vapor deposition. A method for forming an inorganic alignment film using vapor deposition produces a film having a density smaller than that achieved, for example, by chemical vapor deposition or sputtering, and is likely to cause defects such as dangling bonds. The dangling bonds easily induce a chemical reaction with impurities in the liquid crystal material, and when the dangling bonds in this state are irradiated with relatively strong light, radicals may be generated. The radicals may alter the liquid crystal material.

Since there is a gap between adjacent ones of the columnar bodies that constitute the inorganic alignment film, liquid crystal molecules are likely to enter the gaps in the inorganic alignment film that is covered with no metal oxide film. The area where the liquid crystal molecules are in contact with the inorganic alignment film therefore increases, so that there is a concern that the liquid crystal material is more easily altered. That is, there has been a demand for a method for manufacturing an inorganic alignment film that ensures the liquid crystal alignment capability and suppresses the alteration of the liquid crystal material.

### SUMMARY

A method for manufacturing an inorganic alignment film includes: a first step of forming an electrode at a substrate; a second step of forming a first film by vapor deposition so as to cover the substrate and the electrode, the first film having multiple first columns each having a major axis direction being a direction along a normal to the substrate; a third step of forming a second film on the multiple first columns by vapor deposition, the second film having multiple second columns each having a major axis direction that intersects at a first angle with the direction along the normal; a fourth step of forming a protective film on the multiple second columns by atomic deposition; and a fifth step of forming a third film on the protective film by vapor deposition, the third film having multiple third columns each having a major axis direction inclining by a second angle smaller than the first angle with respect to the direction along the normal, the third film being thinner than the second film.

A liquid crystal apparatus includes: a first substrate including pixel electrodes and a first alignment film disposed on the pixel electrodes; a second substrate including a counter electrode and a second alignment film disposed on the counter electrode; and a liquid crystal layer provided between the first substrate and the second substrate, at least one of the first and second substrates including a first film, a second film provided at a side of the first film that is a side facing the liquid crystal layer, a protective film provided at a side of the second film that is a side facing the liquid crystal layer, and a third film provided at a side of the protective film that is a side facing the liquid crystal layer, the first film including multiple first columns each having a major axis direction being a direction along a normal to the first and second substrates, the second film including multiple second columns each having a major axis direction inclining by a first angle with respect to the direction along the normal, and the third film including multiple third columns each having a major axis direction inclining by a second angle smaller than the first angle with respect to the direction along the normal, the third film being thinner than the second film in the direction along the normal.

An electro-optical apparatus includes the liquid crystal apparatus described above.

### BRIEF DESCRIPTION OF THE DRAWINGS

FIG. 1 is a schematic plan view showing the configuration of a liquid crystal apparatus according to a first embodiment.
FIG. 2 is a diagrammatic cross-sectional view showing the configuration of the liquid crystal apparatus.
FIG. 3 is an equivalent circuit diagram showing an electrical configuration of the liquid crystal apparatus.
FIG. 4 is a diagrammatic cross-sectional view showing the configuration of an inorganic alignment film and the like in an element substrate.
FIG. 5 is a diagrammatic cross-sectional view showing the configuration of an inorganic alignment film and the like in a counter substrate.
FIG. 6 is a flowchart showing a method for manufacturing an inorganic alignment film according to a second embodiment.
FIG. 7 is a diagrammatic cross-sectional view showing the method for manufacturing an inorganic alignment film.
FIG. 8 is a diagrammatic cross-sectional view showing the method for manufacturing an inorganic alignment film.
FIG. 9 is a diagrammatic cross-sectional view showing the method for manufacturing an inorganic alignment film.
FIG. 10 is a diagrammatic cross-sectional view showing the method for manufacturing an inorganic alignment film.
FIG. 11 is a diagrammatic view showing the configuration of a projection-type display apparatus as an electro-optical apparatus according to a third embodiment.

### DESCRIPTION OF EMBODIMENTS

In each of the following drawings, a Z-axis alone, or X, Y, and Z axes, which are coordinate axes perpendicular to one another, are used as necessary, a direction indicated by an arrow is defined as a positive (+) direction, and a direction opposite the positive direction is defined as a negative (-) direction. A +Z direction may be referred to as upper and a -Z direction may be referred to as lower, and a view in the +Z direction is referred to as a plan view or planar. To make layers and members large enough to be recognizable, the scales of the layers and the members are made different from actual scales.

Furthermore, for example, descriptions "with respect to a substrate" and "on a substrate" represent any one of a case where something is disposed on the substrate in contact therewith, a case where something is disposed above the substrate with another structure interposed therebetween, and a case where something is so disposed that a portion thereof is in contact with the substrate and another portion thereof is disposed above the substrate with another structure interposed therebetween. The thickness of a structure such as a film provided on the substrate refers to a dimension in a direction along the Z-axis, which is the direction of a normal to the substrate. Note, however, that the definition described above does not apply to the thickness of a protective film described later.

### 1. First embodiment

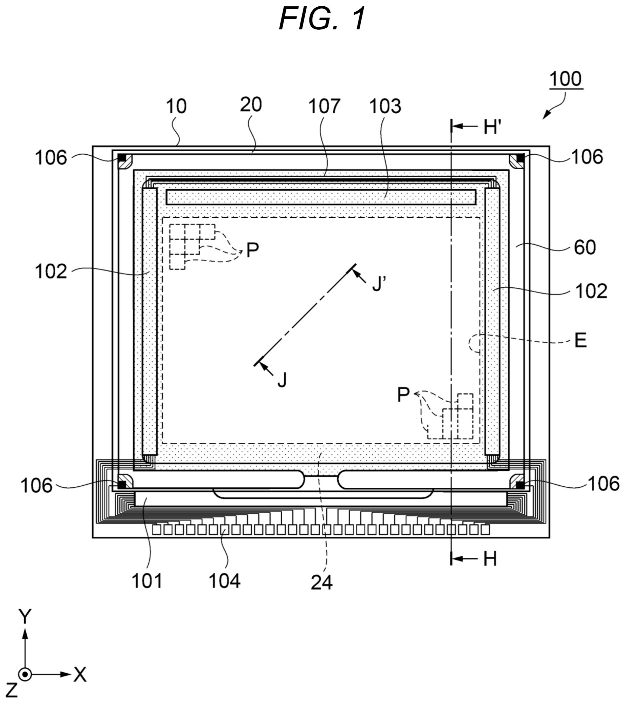

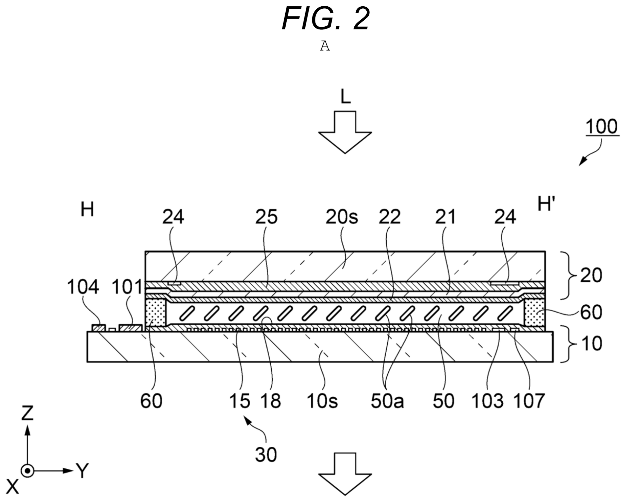

In the present embodiment, an active-drive-type liquid crystal apparatus including thin film transistors (TFTs) is shown by way of example. The configuration of a liquid crystal apparatus 100 according to the present embodiment will be described with reference to FIGS. 1 to 3. FIG. 2 shows a cross section containing a line segment H-H' in FIG. 1 and taken along the YZ plane. In FIG. 2, the size and the number of liquid crystal molecules contained in a liquid crystal layer differ from the actual size and number for convenience of illustration.

The liquid crystal apparatus 100 includes an element substrate 10, which is a first substrate, a counter substrate 20, which is a second substrate, and a liquid crystal layer described later, as shown in FIG. 1. The element substrate 10 and the counter substrate 20 each have a substantially rectangular shape in the plan view. The element substrate 10 and the counter substrate 20 are superimposed on and bonded to each other via a sealing material 60 disposed along the outer edge of the counter substrate 20. A display region E containing multiple pixels P is provided inside the sealing material 60. The multiple pixels P are arranged in a matrix in the direction along the X-axis and the Y-axis.

The sealing material 60 contains curable resin such as thermosetting resin and ultraviolet curable resin. The sealing material 60 can therefore be formed in a desired shape by applying a raw material of the sealing material 60 onto the element substrate 10 and the counter substrate 20 and then curing the resin.

The element substrate 10 includes a data line driving circuit 101, two scanning line driving circuits 102, an inspection circuit 103, and multiple external coupling terminals 104. The element substrate 10 is larger than the counter substrate 20 in the plan view. In the element substrate 10, the multiple external coupling terminals 104 are provided in a region that does not overlap with the counter substrate 20, and the data line driving circuit 101 is provided between the multiple external coupling terminals 104 and the sealing material 60.

A partition 24, which surrounds the display region E, is provided between the sealing material 60 and the display region E. The partition 24 has a substantially rectangular shape, with two sides thereof extending along the Y-axis, and the other two sides thereof extending along the X-axis. The scanning line driving circuits 102 are disposed at and overlap with the aforementioned two sides extending along the Y-axis in the plan view. The two scanning line driving circuits 102 are electrically coupled to each other via wiring 107. The inspection circuit 103 is disposed and overlaps with one of the two sides extending along the X-axis side, the side shifted in the +Y direction, in the plan view. The inspection circuit 103 is electrically coupled to data lines described later.

The data line driving circuit 101 and the two scanning line driving circuits 102 are electrically coupled to the external coupling terminals 104. Conductors 106 extending upward and downward are provided at the four corners of the counter substrate 20.

The element substrate 10 and the counter substrate 20 face each other in the direction along the Z-axis via the sealing material 60 and are disposed separate from each other, as shown in FIG. 2. A liquid crystal layer 50 is provided between the element substrate 10 and the counter substrate 20, and is surrounded by the element substrate 10, the counter substrate 20, and the sealing material 60. The liquid crystal layer 50 contains a liquid crystal material 50a. The liquid crystal material 50a has positive or negative dielectric anisotropy. In the present embodiment, the liquid crystal material 50a having negative dielectric anisotropy is employed. The liquid crystal material 50a described in the description refers to individual liquid crystal molecules that constitute the liquid crystal material 50a or an aggregate of the individual liquid crystal molecules.

The element substrate 10 includes a substrate 10s as a substrate body, a wiring layer including TFTs 30, which are transistors, pixel electrodes 15, and an inorganic alignment film 18, which is a first alignment film. The element substrate 10 is a planar plate having a principal surface extending along the XY plane. In the element substrate 10, the substrate 10s, the wiring layer described above, and the pixel electrodes 15 are disposed in this order toward the liquid crystal layer 50, and the inorganic alignment film 18 is further provided above the layered structure.

The substrate 10s is a light-transmissive, insulating planar-plate-shaped member. The substrate 10s is, for example, a glass substrate or a quartz substrate. The TFTs 30 are disposed between multiple interlayer insulating layers provided on the substrate 10s. Note that the term "light-transmissive" means transparency to visible light, and means that the transmittance for the visible light is preferably higher than or equal to 50%.

The pixel electrodes 15 are light-transmissive electrodes. The pixel electrodes 15 contain a transparent electrically conductive material, for example, indium tin oxide (ITO), indium zinc oxide (IZO), or fluorine-doped tin oxide (FTO). In the liquid crystal apparatus 100, ITO is used as the transparent electrically conductive material.

The inorganic alignment film 18 is disposed on the pixel electrodes 15, and has an upper surface facing the liquid crystal layer 50. The inorganic alignment film 18 is a light-transmissive, insulating film, and includes a first film, a second film, a protective film, and a third film described later.

The counter substrate 20 includes a substrate 20s as a substrate body, a partition 24, an insulating layer 25, a counter electrode 21, and an inorganic alignment film 22, which is a second alignment film. The counter substrate 20 is a planar plate having a principal surface extending along the XY plane. In the counter substrate 20, the substrate 20s, the partition 24, the insulating layer 25, and the counter electrode 21 are disposed in this order toward the liquid crystal layer 50, and the inorganic alignment film 22 is further provided at a position shifted from the layered structure in the -Z direction.

The substrate 20s is a light-transmissive, insulating planar-plate-shaped member. The substrate 20s is, for example, a glass substrate or a quartz substrate. The insulating layer 25 is a light-transmissive, insulating layer. The material of the insulating layer 25 is, for example, an inorganic material such as silicon oxide. The counter electrode 21 is an electrode disposed to face the multiple pixel electrodes 15. The counter electrode 21 contains the transparent electrically conductive material described above. The counter electrode 21 and the pixel electrodes 15 apply an electric field to the liquid crystal layer 50.

The inorganic alignment film 22 is disposed on the counter electrode 21, and has a lower surface facing the liquid crystal layer 50. The inorganic alignment film 22 is a light-transmissive, insulating film, and includes a first film, a second film, a protective film, and a third film described later.

The inorganic alignment films 18 and 22 are manufactured by a method for manufacturing the inorganic alignment films 18 and 22 described later. The inorganic alignment films 18 and 22 are formed based on the optical design of the liquid crystal apparatus 100. The inorganic alignment films 18 and 22 have the function of aligning the liquid crystal material 50a of the liquid crystal layer 50, and the alignment state of the liquid crystal material 50a changes depending on a voltage applied in accordance with image signals described later. In the present embodiment, the inorganic alignment films 18 and 22 substantially vertically align the liquid crystal material 50a having negative dielectric anisotropy.

The inorganic alignment films 18 and 22 impart a pretilt to align the liquid crystal material 50a. The tilt direction of the pretilt of the liquid crystal material 50a intersects with the X-axis and the Y-axis. The tilt direction of the pretilt of the liquid crystal material 50a is determined by the direction of the vapor deposition performed when the inorganic alignment films 18 and 22 are formed. The tilt direction of the pretilt of the liquid crystal material 50a is preferably so set that the azimuth angle thereof with respect to the Z-axis is greater than or equal to 4 degrees but smaller than or equal to 6 degrees, and is, for example, so set that the azimuth angle with respect to the Z-axis is 5 degrees. Details of the inorganic alignment films 18 and 22 will be described later.

For example, a light-transmissive, insulating planar plate such as a glass substrate or a quartz substrate is employed as each of the substrates 10s and 20s. In the present specification, the term "light-transmissive" means that the transmittance for visible light is higher than or equal to 50%.

The liquid crystal apparatus 100 is a transmissive apparatus, and light L is incident in the +Z direction, which corresponds to the side facing the counter substrate 20, and exits out of the element substrate 10 via the liquid crystal layer 50. The light L is modulated in accordance with the alignment state of the liquid crystal material 50a when passing through the liquid crystal layer 50. The direction in which the light L is incident on the liquid crystal apparatus 100 is not limited to the direction described above, and the light L may be incident from the side facing the element substrate 10. Furthermore, the liquid crystal apparatus 100 is not limited to a transmissive apparatus and may be a reflective apparatus. The liquid crystal apparatus 100 is optically designed based on a normally white mode or a normally black mode. The liquid crystal apparatus 100 may include polarizers on the side on which the light L is incident and the side via which the light L exits.

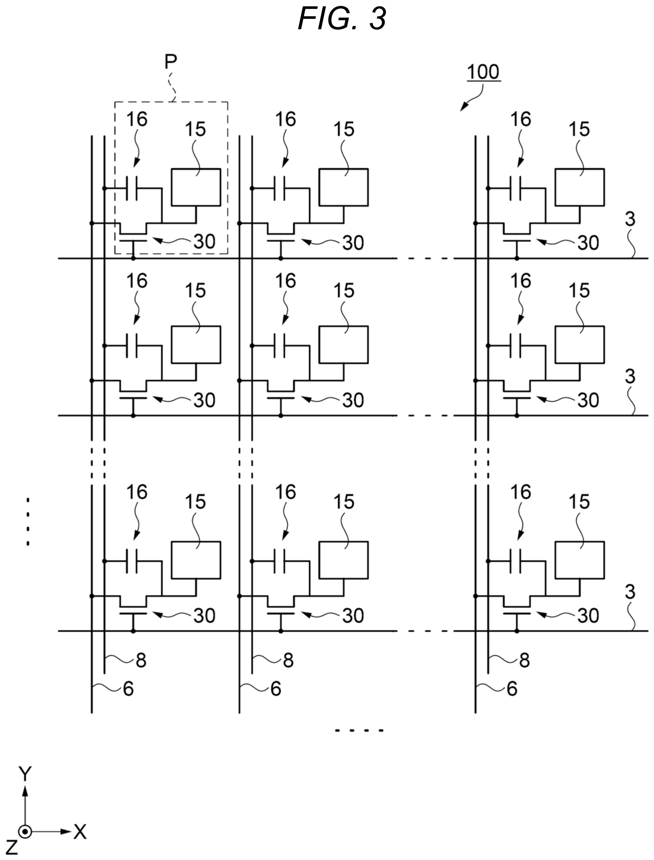

The liquid crystal apparatus 100 includes multiple data lines 6, multiple scanning lines 3, and multiple capacitance lines 8 as signal wires insulated from each other, as shown in FIG. 3. The scanning lines 3 extend along the X-axis, and the data lines 6 and the capacitance lines 8 extend along the Y-axis. Note that the capacitance lines 8 do not necessarily extend along the Y-axis, and may extend along the X-axis.

The pixel electrodes 15, the TFTs 30, and capacitive elements 16 are provided in regions each including a pixel P and separated by the scanning lines 3, the data lines 6, and the capacitance lines 8, and constitute a pixel circuit of the pixel P. The signal wires such as the scanning lines 3, the data lines 6, and the capacitance lines 8 are provided in the wiring layer described above.

The scanning lines 3 are electrically coupled to the gates of the TFTs 30, which are switching elements. The data lines 6 are electrically coupled to data-line-side source/drain regions of the TFTs 30. The scanning lines 3 simultaneously control the TFTs 30 provided in a single row to be turned on or off. The pixel electrodes 15 are electrically coupled to pixel-electrode-side source/drain regions of the TFTs 30.

The data lines 6 are electrically coupled to the data line driving circuit 101 described above, and supply the pixels P with image signals supplied from the data line driving circuit 101. The image signals may be supplied in a line sequential manner to the data lines 6, or may be supplied to multiple adjacent data lines 6 on a group basis.

The scanning lines 3 are electrically coupled to the scanning line driving circuits 102 described above, and supply the pixels P with scanning signals supplied from the scanning line driving circuits 102. The scanning signals are supplied in a line sequential manner to the scanning lines 3 in the form of a pulse at predetermined timings.

The TFTs 30 are turned on for a certain period by the input of the scanning signals, and the image signals are applied to the pixel electrodes 15 at the predetermined timings. The image signals are written to the liquid crystal layer 50 at predetermined levels via the pixel electrodes 15, and are held for a certain period between the pixel electrodes 15 and the counter electrode 21, which sandwich the liquid crystal layer 50. In this process, the alignment state of the liquid crystal material 50a is changed by the voltages applied in accordance with the image signals. To prevent the held image signals from leaking, the capacitive elements 16 are electrically coupled in parallel to liquid crystal capacitance provided between the pixel electrodes 15 and the counter electrode 21. The capacitive elements 16 are provided in a layer between the TFTs 30 and the capacitance lines 8.

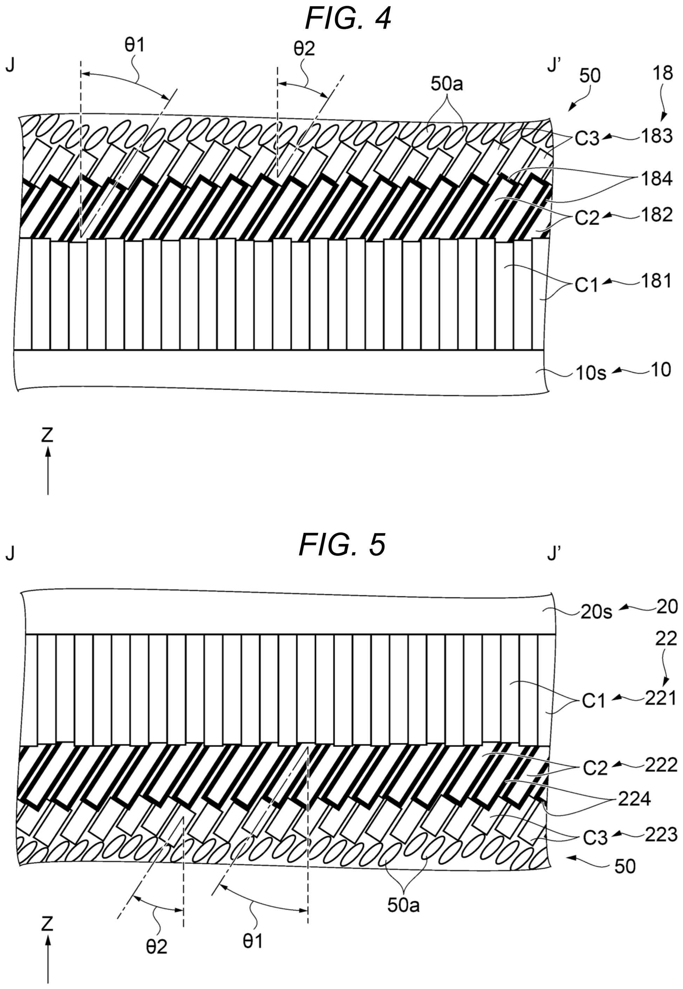

A detailed configuration of the inorganic alignment films 18 and 22 in the liquid crystal apparatus 100 will be described with reference to FIGS. 4 and 5. FIGS. 4 and 5 show a cross section containing a line segment J-J' in FIG. 1 and perpendicular to the XY plane. The line segment J-J' extends along the aforementioned tilt direction of the pretilt of the liquid crystal material 50a. FIGS. 4 and 5 do not show some of the configuration of the liquid crystal apparatus 100 for clarity of the drawings.

The inorganic alignment film 18 as the first alignment film includes a first film 181, a second film 182, a protective film 184, and a third film 183, as shown in FIG. 4. Note that FIG. 4 does not show various wiring layers, the pixel electrodes 15, or the like provided at the substrate 10s. In FIG. 4, the size and the number of the liquid crystal molecules 50a contained in the liquid crystal layer 50 differ from the actual size and number for convenience of illustration.

The first film 181 is disposed at the lowest position in the inorganic alignment film 18. The first film 181 includes multiple first columns C1. The first columns C1 are each a columnar crystalline body made, for example, of silicon oxide, aluminum oxide, or magnesium oxide, and are formed by vapor deposition. The first columns C1 each have a major axis direction that is the direction along a normal to the element substrate 10, that is, the direction along the Z-axis. In the liquid crystal apparatus 100, silicon oxide is employed as the material of the first columns C1. The thickness of the first film 181 is preferably greater than or equal to 36 nm but smaller than or equal to 44 nm, and is, for example, about 40 nm.

The second film 182 is provided in contact with the first film 181 on the side facing the liquid crystal layer 50, which is the upper side of the first film 181. The second film 182 includes multiple second columns C2. The second columns C2 are each a columnar crystalline body made, for example, of silicon oxide, aluminum oxide, or magnesium oxide, and are formed by vapor deposition. The major axis direction of each of the second columns C2 inclines by a first angle θ1 with respect to the direction along the Z-axis. The first angle θ1 is, for example, about 55 degrees. In the liquid crystal apparatus 100, silicon oxide is employed as the material of the second columns C2. The thickness of the second film 182 is preferably greater than or equal to 18 nm but smaller than or equal to 22 nm, and is, for example, about 20 nm.

The protective film 184 is provided at a surface of the second film 182 that is the surface facing the liquid crystal layer 50. In detail, the protective film 184 is disposed at the surface of each of the second columns C2 of the second film 182 excluding the region in contact with the first film 181. The protective film 184 covers the aforementioned surfaces of the multiple second columns C2 and fills the gap between adjacent ones of the second columns C2 or reduces the volume of the gap. The contact between the multiple second columns C2 and the liquid crystal material 50a is thus suppressed.

The protective film 184 contains silicon oxide and is formed by atomic layer deposition (ALD). In the present embodiment, the protective film 184 is made of silicon oxide. The protective film 184 can therefore be readily formed by using a relatively inexpensive material.

The thickness of the protective film 184 is preferably greater than or equal to 0.5 nm (5 Å) but smaller than or equal to 1.4 nm (14 Å). The alteration of the liquid crystal material 50a can thus be further suppressed without excessively lowering the liquid crystal alignment capability of the second film 182. In the present embodiment, the thickness of the protective film 184 is set to about 1.0 nm. Note in the present specification that the thickness of each of the protective film 184 and a protective film 224, the latter of which will be described later, is a dimension in the direction of a normal to the surface of each of the second columns C2, which are columnar crystalline bodies.

The third film 183 is provided so as to face the liquid crystal layer 50 on a side of the protective film 184 that is the side facing the liquid crystal layer 50, which is the upper side of the second film 182. The third film 183 reinforces the liquid crystal alignment capability of the second film 182. The third film 183 includes multiple third columns C3. The third columns C3 are each a columnar crystalline body made, for example, of silicon oxide, aluminum oxide, or magnesium oxide, and are formed by vapor deposition. The major axis direction of each of the third columns C3 inclines by a second angle θ2 with respect to the direction along the Z-axis. The second angle θ2 is smaller than the first angle θ1. The second angle θ2 is preferably greater than or equal to 40 degrees but smaller than or equal to 50 degrees, and is, for example, about 45 degrees. In the liquid crystal apparatus 100, silicon oxide is employed as the material of the third columns C3.

The third film 183 is thinner than the second film 182. The surface area of the third columns C3 is thus smaller than that of the second columns C2, so that the area where the third columns C3 are in contact with the liquid crystal material 50a decreases. The alteration of the liquid crystal material 50a is therefore suppressed. The thickness of the third film 183 is preferably greater than or equal to 5 nm but smaller than or equal to 7 nm, and is, for example, about 6 nm.

The film density of the third film 183 is lower than the film density of the second film 182. That is, the multiple third columns C3 are more sparsely formed than the multiple second columns C2. The liquid crystal alignment capability of the third film 183 is thus improved. In addition, even when the gap between adjacent one of the third columns C3 increases, an increase in the area where the third columns C3 are in contact with the liquid crystal material 50a is suppressed by making the third film 183 relatively thin.

The film density of the third film 183 and the film density of the second film 182 can be compared with each other in terms of the etching rate in wet etching, that is, a depth etched per unit period. The higher the film density is, the more difficult the film is etched, and the lower the film density is, the easier the film is etched and the higher the etching rate is.

The third film 183 is preferably subjected to a surface treatment using a silane coupling agent. The surface of each of the third columns C3 is thus coated with an organosilane compound. A reaction between the dangling bonds at the surface of each of the third columns C3 and the moisture, which is an impurity, in the liquid crystal material 50a is therefore suppressed, so that generation of a silanol group is suppressed. The silanol group may generate radicals that alter the liquid crystal material 50a when irradiated with relatively strong light. The surface treatment can prevent generation of the silanol group in the third film 183 to further suppress the alteration of the liquid crystal material 50a.

The inorganic alignment film 22 as the second alignment film includes a first film 221, a second film 222, a protective film 224, and a third film 223, as shown in FIG. 5. The first film 221, the second film 222, the protective film 224, and the third film 223 are configured in the same manner as the films of the element substrate 10 described above, and redundant description will therefore be omitted. Note that FIG. 5 does not show various wiring layers, the counter electrode 21, or the like provided at the substrate 20s. In FIG. 5, the size and the number of liquid crystal molecules 50a contained in the liquid crystal layer 50 differ from the actual size and number for convenience of illustration.

The first film 221 is disposed at a position shifted most in the +Z direction in the inorganic alignment film 22. The first film 221 corresponds to the first film 181 of the inorganic alignment film 18. The first film 221 includes multiple first columns C1. The first columns C1 each have a major axis direction that is the direction along a normal to the counter substrate 20, that is, the direction along the Z-axis. The thickness of the first film 221 is, for example, about 40 nm.

The second film 222 is provided in contact with the first film 221 on the side facing the liquid crystal layer 50, which is the -Z-direction side of the first film 221. The second film 222 corresponds to the second film 182 of the inorganic alignment film 18. The second film 222 includes multiple second columns C2. The major axis direction of each of the second columns C2 inclines by the first angle θ1 with respect to the direction along the Z-axis. The thickness of the second film 182 is, for example, about 20 nm.

The protective film 224 is provided at a surface of the second film 222 that is the surface facing the liquid crystal layer 50. The protective film 224 corresponds to the protective film 184 of the inorganic alignment film 18. The protective film 224 is disposed at the surface of each of the second columns C2 of the second film 222 excluding the region in contact with the first film 221. The protective film 224 covers the surfaces of the multiple second columns C2 and fills the gap between adjacent ones of the second columns C2 or reduces the volume of the gap. The contact between the multiple second columns C2 and the liquid crystal material 50a is thus suppressed.

The protective film 224 contains silicon oxide and is formed by atomic layer deposition (ALD). In the present embodiment, the protective film 224 is made of silicon oxide.

The thickness of the protective film 224 is preferably greater than or equal to 0.5 nm (5 Å) but smaller than or equal to 1.4 nm (14 Å). In the present embodiment, the thickness of the protective film 224 is set to about 1.0 nm.

The third film 223 is provided in the second film 222 so as to face the liquid crystal layer 50 on a side of the protective film 224 that is the side facing the liquid crystal layer 50, which is the -Z-direction side of the second film 222. The third film 223 includes multiple third columns C3. The major axis direction of each of the third columns C3 inclines by the second angle θ2 with respect to the direction along the Z-axis. In the liquid crystal apparatus 100, silicon oxide is employed as the material of the third columns C3.

The third film 223 is thinner than the second film 222. The surface area of the third columns C3 is thus smaller than that of the second columns C2, so that the area where the third columns C3 are in contact with the liquid crystal material 50a decreases. The alteration of the liquid crystal material 50a is therefore suppressed. The thickness of the third film 223 is, for example, about 6 nm.

The film density of the third film 223 is lower than the film density of the second film 222, and the multiple third columns C3 are more sparsely formed than the multiple second columns C2. The film density of the third film 223 and the film density of the second film 222 can be compared with each other in terms of the etching rate in wet etching.

The third film 223 is preferably subjected to a surface treatment using a silane coupling agent. The surface of each of the third columns C3 is thus coated with an organosilane compound, so that the alteration of the liquid crystal material 50a can be further suppressed.

In the present embodiment, the element substrate 10 includes the first film 181, the second film 182, the protective film 184, and the third film 183, and the counter substrate 20 includes the first film 221, the second film 222, the protective film 224, and the third film 223, that is, both the element substrate 10 and the counter substrate 20 include the multiple first columns C1, the multiple second columns C2, the protective film 184 or the protective film 224, and the third columns C3. Therefore, in both the element substrate 10 and the counter substrate 20, the liquid crystal alignment capability can be ensured, and the alteration of the liquid crystal material 50a can be suppressed.

Note that the liquid crystal apparatus according to the present embodiment of the disclosure does not necessarily have the configuration described above, and may have a configuration in which at least one of the element substrate 10 and the counter substrate 20 includes the multiple first columns C1, the multiple second columns C2, the protective film 184 or the protective film 224, and the third columns C3.

The present embodiment can provide the advantages below.

The liquid crystal alignment capability is ensured, and the alteration of the liquid crystal material 50a is suppressed, so that the display quality of the liquid crystal apparatus 100 can be improved. In detail, the third films 183 and 223 are thinner than the second films 182 and 222, respectively, and the surface areas of the third films 183 and 223 are smaller than the surface areas of the second films 182 and 222, respectively. The area where the third films 183 and 223 are in contact with the liquid crystal material 50a therefore decreases, so that the alteration of the liquid crystal material 50a is suppressed.

In particular, when an alignment film is formed by vapor deposition, dangling bonds are likely to be produced at the surfaces of the columnar crystalline bodies. The dangling bonds react with moisture that is an impurity in the liquid crystal material 50a to generate the silanol group. The silanol group generates radicals that alter the liquid crystal material 50a when irradiated with relatively strong light. In contrast, since the columnar crystalline bodies made of silicon oxide are covered with the protective films 184 and 224, the generation of the silanol group can be prevented.

The protective films 184 and 224 slightly weaken the liquid crystal alignment capability of the second films 182 and 222, but the third films 183 and 223 enhance the liquid crystal alignment capability. The liquid crystal alignment capability of the inorganic alignment films 18 and 22 is therefore ensured. As described above, the liquid crystal apparatus 100 can be so provided that the liquid crystal alignment capability is ensured, and the alteration of the liquid crystal molecules is suppressed.

### 2. Second embodiment

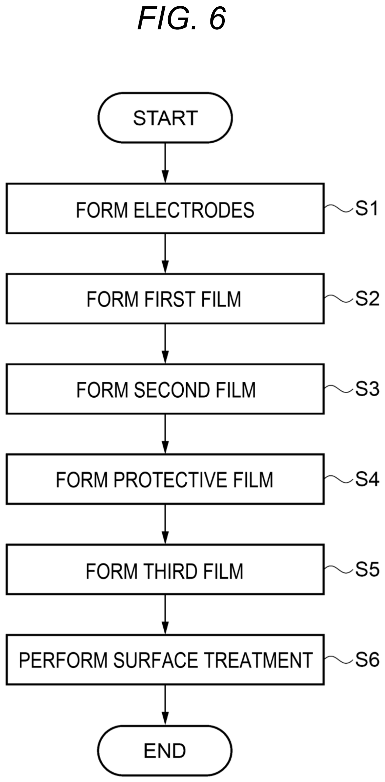

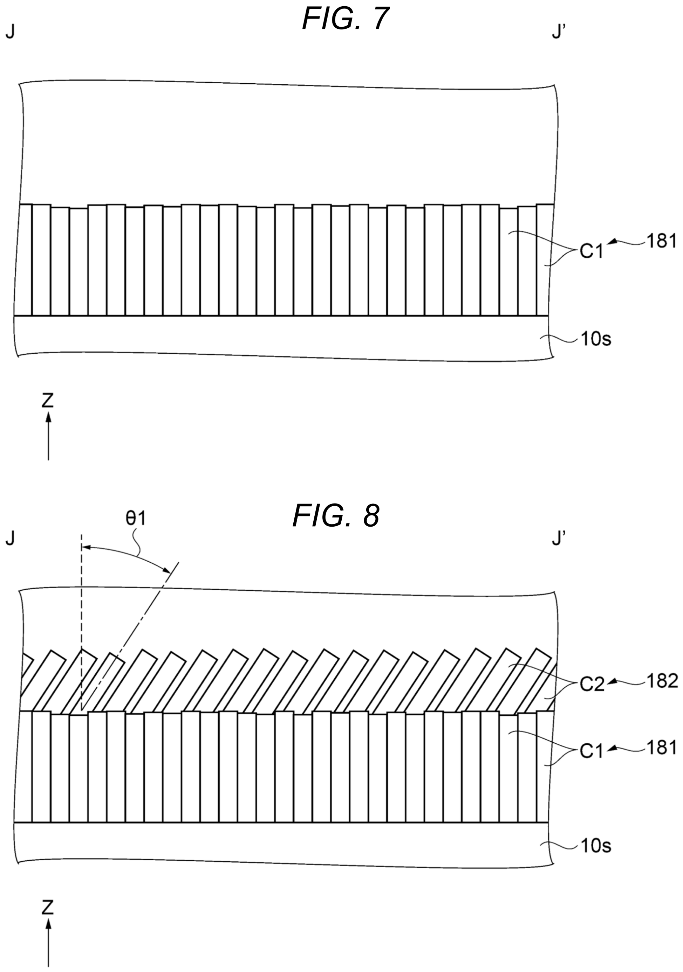

In the present embodiment, a method for manufacturing the inorganic alignment films 18 and 22 described above will be presented by way of example, and will be described with reference to FIGS. 6 to 10. FIGS. 7 to 10 show a cross section containing the line segment J-J' in FIG. 1 and perpendicular to the XY plane. The line segment J-J' extends along the aforementioned tilt direction of the pretilt of the liquid crystal material 50a. In FIGS. 7 to 10, some of the configuration are not shown for clarity of the figures.

The method for manufacturing the inorganic alignment films 18 and 22 according to the present embodiment includes a first step S1 to a sixth step S6, as shown in FIG. 6. Note that the process procedure shown in FIG. 6 is an example and the method is not limited thereto.

In the first step S1, electrodes, various types of wiring, insulating layers, and the like are formed at the substrates 10s and 20s described above. The pixel electrodes 15 and the like are formed at the substrate 10s, and the counter electrode 21 and the like are formed at the substrate 20s. A known method can be applied to the first step S1. The process then proceeds to the second step S2. Note that the steps after the second step S2 are common to the inorganic alignment films 18 and 22. Therefore, in the following description, the inorganic alignment film 18 of the element substrate 10 will be described as a representative example, and the description of the inorganic alignment film 22 of the counter substrate 20 will be omitted.

In the second step S2, the first film 181 having the multiple first columns C1 is formed by vapor deposition so as to cover the substrate 10s, the pixel electrodes 15 that are not shown, and the like, as shown in FIG. 7. In detail, silicon oxide molecules are deposited in the +Z direction with respect to a principal surface of the substrate 10s that is the principal surface facing upward by vacuum deposition, which is one kind of physical vapor deposition (PVD), to grow the multiple first columns C1. In this process, a vapor deposition source that is not shown and the substrate 10s are so disposed along the Z-axis that the major axis direction of each of the first columns C1 is the direction along a normal to the substrate 10s, that is, the direction along the Z-axis. In the first columns C1, the second columns C2, and the third columns C3, the latter two of which will be described later, the major axis direction is the direction in which the columnar crystalline bodies grow. In the present embodiment, the thickness of the first film 181 is set to about 40 nm. The process then proceeds to the third step S3.

In the third step S3, the second film 182 having the multiple second columns C2 is formed on the multiple first columns C1 by vapor deposition, as shown in FIG. 8. In detail, silicon oxide molecules are deposited by vacuum vapor deposition in an oblique direction that intersects with the Z-axis to grow the multiple second columns C2. In this process, a vapor deposition source that is not shown and the substrate 10s are so disposed that the major axis direction of each of the second columns C2 intersects with the direction along the Z-axis at the first angle θ1. Note that the angle of the oblique vapor deposition between the line segment that couples the vapor deposition source to the substrate 10s and the Z-axis does not necessarily coincide with the first angle θ1. In the present embodiment, the thickness of the second film 182 is set to about 20 nm.

Now consider Comparative Example in which the first film 181 and the second film 182 in the state shown in FIG. 8 are used as the alignment films, and the liquid crystal alignment capability is ensured, so that the liquid crystal material 50a described above can be aligned. However, since there is a gap between adjacent ones of the second columns C2, the liquid crystal material 50a easily enters the gaps. The liquid crystal material 50a therefore comes into contact with the second columns C2 in the gaps described above in addition to the upper surface of the second film 182, so that the aforementioned alteration of the liquid crystal material 50a easily occurs. In contrast, in the method for manufacturing the inorganic alignment films 18 and 22 according to the present embodiment, the area where the second columns C2 and the second film 182 are in contact with the liquid crystal material 50a is reduced by forming the protective film 184 and the like described above to suppress the alteration of the liquid crystal material 50a.

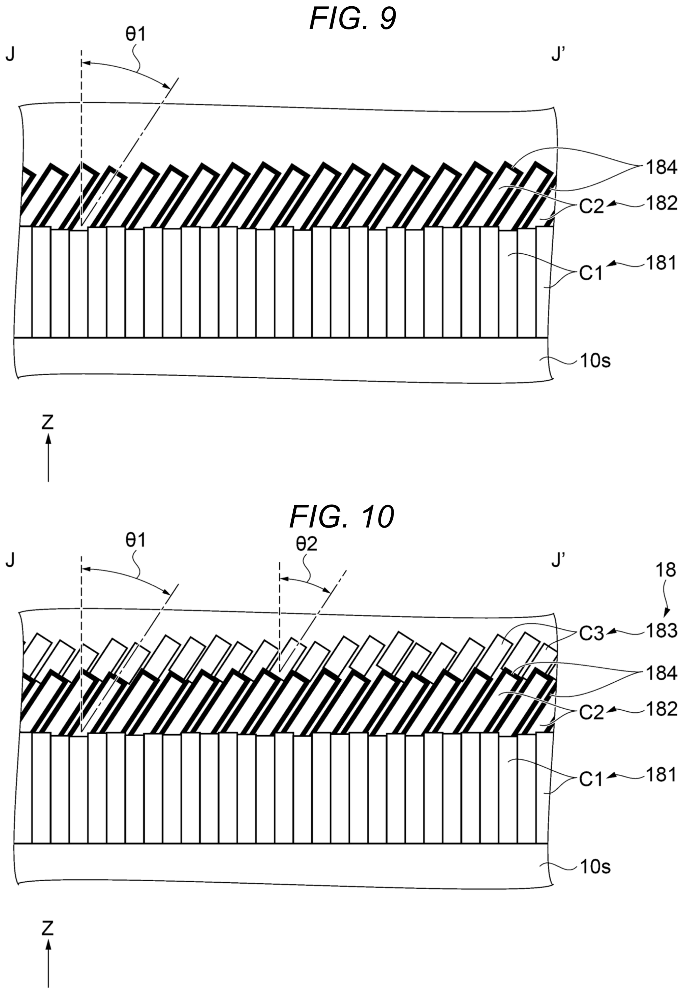

In the fourth step S4, the protective film 184 containing silicon oxide is formed by atomic deposition on the entire multiple second columns C2 and at the surface of each of the second columns C2 excluding the regions in contact with the first film 181, as shown in FIG. 9. In the present embodiment, silicon oxide is used as the protective films 184 and 224. The protective films 184 and 224 can thus be readily formed by using a relatively inexpensive material.

The atomic deposition is a method for depositing and forming thin films on an atomic layer basis by causing a chemical reaction to proceed periodically. The atomic deposition therefore allows formation of a uniform, dense film as compared with vapor-deposition-based film formation. The atomic deposition is particularly suitable for film formation at a narrow place such as the gap between adjacent ones of the second columns C2. A known apparatus can be used to form the protective films 184 and 224 in the present embodiment.

To form a film made of silicon oxide as each of the protective films 184 and 224, for example, the following process is carried out. First, a bis(diethylamino)silane or tris(dimethylamino)silane gas is introduced as a precursor into a chamber to cause a reaction thereof with the surfaces of the second columns C2 to proceed. Next, the precursor that has not reacted with the surfaces and the like are discharged out of the chamber, and then ligands at the surfaces are removed by plasma. The procedure described above is repeated to form the protective films 184 and 224 made of silicon oxide on an atomic layer basis.

In the fourth step S4, the thickness of each of the protective films 184 and 224 to be formed is preferably set to a value greater than or equal to 0.5 nm (5 Å) but smaller than or equal to 1.4 nm (14 Å). The alteration of the liquid crystal material 50a can thus be further suppressed without excessively lowering the liquid crystal alignment capability of the second films 182 and 222. In the present embodiment, the thickness of each of the protective films 184 and 224 is set to about 1.0 nm.

Now consider Comparative Example in which the state shown in FIG. 9, that is, only the first film 181 and the second film 182, the latter of which is covered with the protective film 184, are used as the alignment films, the alteration of the liquid crystal material 50a is suppressed, but the liquid crystal alignment capability is weak, so that it is difficult to align the liquid crystal material 50a. In contrast, in the method for manufacturing the inorganic alignment films 18 and 22 in the present embodiment, the third columns C3 are formed at sides of the protective films 184 and 224 that are sides facing the liquid crystal layer 50 to ensure the liquid crystal alignment capability. The process then proceeds to the fifth step S5.

In the fifth step S5, the third film 183 having the multiple third columns C3 is formed by vapor deposition on the protective film 184 above the second columns C2, as shown in FIG. 10. In detail, silicon oxide molecules are deposited by vacuum vapor deposition in an oblique direction that intersects with the Z-axis to grow the multiple third columns C3. In this process, a vapor deposition source that is not shown and the substrate 10s are so disposed that the major axis direction of each of the third columns C3 intersects with the direction along the Z-axis at the second angle θ2, as in the third step S3.

In the fifth step S5, the third film 183 is made thinner than the second film 182. The area where the third film 183 is in contact with the liquid crystal material 50a therefore decreases. The thickness of the third film 183 is set to about 6 nm as compared with about 20 nm, which is the thickness of the second film 182.

In addition, the film density of the third film 183 is made lower than the film density of the second film 182. Making the film density of the third film 183 relatively small, that is, forming the third columns C3 relatively sparsely improves the liquid crystal orientation capability. Even when the film density of the third film 183 is made relatively low, the fact that the third film 183 is thinner than the second film 182 can reduce the area where the third film 183 is in contact with the liquid crystal material 50a and therefore suppress the alteration of the liquid crystal material 50a.

To make the thickness and the film density of the third film 183 smaller than those of the second film 182, the third film 183 is formed, for example, by performing the film formation at a lowest possible vacuum and a lowest possible rate. The process then proceeds to the sixth step S6.

In the sixth step S6, the third film 183 is subjected to surface treatment using a silane coupling agent after the fifth step S5. In detail, the silane coupling agent is hydrolyzed to generate the silanol group from the alkoxy group. A silanol group, a hydroxyl group at the surface of each of the third columns C3, and another silanol group are subjected to a dehydration condensation reaction to generate a covalent bond. An organosilane compound is thus bonded to the surface of the third column C3.

Examples of the silane coupling agent may include silane compounds such as hexyltrimethoxysilane, hexyltriethoxysilane, cyclohexylmethyldimethoxysilane, octyltriethoxysilane, and decyltrimethoxysilane.

The surface treatment described above prevents the contact between the surfaces of the third columns C3 and moisture that is an impurity in the liquid crystal material 50a, so that the alteration of the liquid crystal material 50a can be further suppressed. The inorganic alignment films 18 and 22 are manufactured by the steps described above.

The present embodiment can provide the advantages below.

The inorganic alignment films 18 and 22 can be so manufactured that the liquid crystal alignment capability is ensured and the alteration of the liquid crystal material 50a is suppressed. In detail, the third films 183 and 223 are thinner than the second films 182 and 222, respectively, and the surface areas of the third films 183 and 223 are smaller than the surface areas of the second films 182 and 222, respectively. The area where the third films 183 and 223 are in contact with the liquid crystal material 50a therefore decreases, so that the alteration of the liquid crystal material 50a is suppressed.

In particular, when an alignment film is formed by vapor deposition, dangling bonds are likely to be produced at the surfaces of the columnar crystalline bodies. The dangling bonds react with moisture that is an impurity in the liquid crystal material 50a to generate the silanol group. The silanol group generates radicals that alter the liquid crystal material 50a when irradiated with relatively strong light. In contrast, since the columnar crystalline bodies made of silicon oxide are covered with the protective films 184 and 224, the generation of the silanol group can be prevented.

The protective films 184 and 224 slightly weaken the liquid crystal alignment capability of the second films 182 and 222, but the third films 183 and 223 enhance the liquid crystal alignment capability. The liquid crystal alignment capability of the inorganic alignment films 18 and 22 is therefore ensured. As described above, the method for manufacturing the inorganic alignment films 18 and 22 can be so provided that the liquid crystal alignment capability is ensured and the alteration of the liquid crystal molecules is suppressed.

### 3. Third embodiment

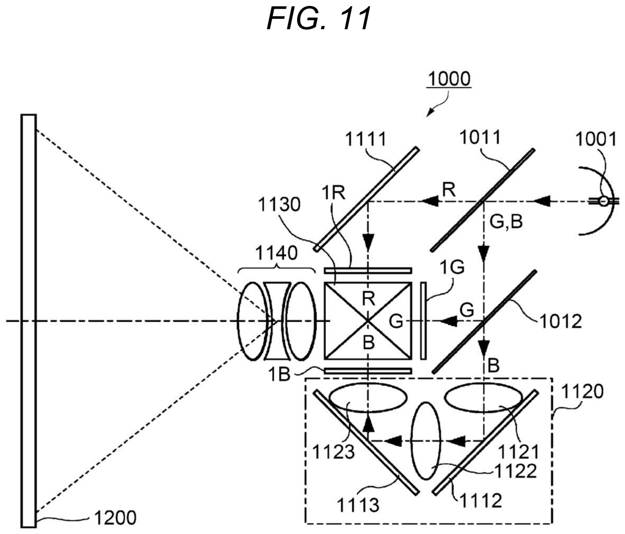

A projection-type display apparatus 1000 will be presented by way of example and described as an electro-optical apparatus according to the present embodiment with reference to FIG. 11. The projection-type display apparatus 1000 is a projector.

The projection-type display apparatus 1000 includes a lamp unit 1001, dichroic mirrors 1011 and 1012 of a color separation system, three liquid crystal apparatuses 1B, 1G, and 1R, reflection mirrors 1111, 1112, and 1113, relay lenses 1121, 1122, and 1123, a dichroic prism 1130 of a light combining system, and a projection lens 1140 of a projection system, as shown in FIG. 11.

The projection-type display apparatus 1000 includes the liquid crystal apparatus 100 according to the embodiment described above as any of the liquid crystal apparatuses 1R, 1G, and 1B. The liquid crystal apparatus 100 may be used as one or more of the liquid crystal apparatuses 1R, 1G, and 1B, and is more preferably used as all the liquid crystal apparatuses.

The lamp unit 1001 is, for example, a discharge-type light source. The light source is not necessarily of the type described above. The light source may be a solid-state light source such as a light emitting diode or a laser.

The light output from the lamp unit 1001 is separated by the dichroic mirrors 1011 and 1012 into three types of color light having different wavelength ranges. The three types of color light are red light R, the color of which is substantially red, green light G, the color of which is substantially green, and blue light B, the color of which is substantially blue.

The dichroic mirror 1011 transmits the red light R and reflects the green light G and the blue light B shorter in wavelength than the red light R. The red light R having passed through the dichroic mirror 1011 is reflected off the reflection mirror 1111 and enters the liquid crystal apparatus 1R. The green light G reflected off the dichroic mirror 1011 is reflected off the dichroic mirror 1012 and then enters the liquid crystal apparatus 1G. The blue light B reflected off the dichroic mirror 1011 passes through the dichroic mirror 1012 and enters a relay lens system 1120.

The relay lens system 1120 includes the relay lenses 1121, 1122, and 1123 and the reflection mirrors 1112 and 1113. The blue light B has an optical path longer than those of the green light G and the red light R, and therefore has a luminous flux that tends to be large. The relay lens 1122 is therefore used to suppress the enlargement of the luminous flux. The blue light B having entered the relay lens system 1120 is reflected off the reflection mirror 1112 while being made convergent by the relay lens 1121, and forms a spot in the vicinity of the relay lens 1122. The blue light B then enters the liquid crystal apparatus 1B via the reflection mirror 1113 and the relay lens 1123.

The liquid crystal apparatuses 1R, 1G, and 1B are each electrically coupled to an upper-level circuit of the projection-type display apparatus 1000. Therefore, when image signals that specify the gradation levels of the red light R, the green light G, and the blue light B are supplied from an external circuit to the upper-level circuit and processed, the liquid crystal apparatuses 1R, 1G, and 1B are driven to modulate the respective types of color light.

The red light R, the green light G, and the blue light B modulated by the liquid crystal apparatuses 1R, 1G, and 1B enter the dichroic prism 1130 in three directions. The dichroic prism 1130 combines the incident red light R, green light G, and blue light B with one another. The dichroic prism 1130 reflects the red light R and the blue light B by 90 degrees and transmits the green light G. The red light R, the green light G, and the blue light B are thus combined with one another into display light used to display a color image and enter the projection lens 1140.

The projection lens 1140 is disposed to face the exterior of the projection-type display apparatus 1000. The display light is enlarged by and output via the projection lens 1140, and a projection image is projected onto a screen 1200, which is a projection target.

In the present embodiment, the projection-type display apparatus 1000 is exemplified as the electro-optical apparatus, but the electro-optical apparatus is not limited thereto. The liquid crystal apparatus according to any of the embodiments of the present disclosure may be used in an electro-optical apparatus such as a projection-type head-up display (HUD), a direct-view head-mounted display (HMD), a personal computer, a digital camera, or a liquid crystal television.

The embodiments of the present disclosure can thus provide a projection-type display apparatus 1000 that provides excellent display quality and maintains the display quality even when relatively strong light is incident.

## Claims

1. A method for manufacturing an inorganic alignment film, the method comprising:
a first step of forming an electrode at a substrate;
a second step of forming a first film by vapor deposition so as to cover the substrate and the electrode, the first film having multiple first columns each having a major axis direction being a direction along a normal to the substrate;
a third step of forming a second film on the multiple first columns by vapor deposition, the second film having multiple second columns each having a major axis direction that intersects at a first angle with the direction along the normal;
a fourth step of forming a protective film on the multiple second columns by atomic deposition; and
a fifth step of forming a third film on the protective film by vapor deposition, the third film having multiple third columns each having a major axis direction inclining by a second angle smaller than the first angle with respect to the direction along the normal, the third film being thinner than the second film.

2. The method for manufacturing an inorganic alignment film according to claim 1, wherein the protective film contains silicon oxide.

3. The method for manufacturing an inorganic alignment film according to claim 1, further comprising a sixth step of subjecting the third film to a surface treatment using a silane coupling agent after the fifth step.

4. The method for manufacturing an inorganic alignment film according to claim 1, wherein in the fifth step, a film density of the third film is made lower than a film density of the second film.

5. The method for manufacturing an inorganic alignment film according to claim 1, wherein in the fourth step, a thickness of the protective film is set to a value greater than or equal to 5 Å but smaller than or equal to 14 Å.

6. A liquid crystal apparatus comprising:
a first substrate including pixel electrodes and a first alignment film disposed on the pixel electrodes;
a second substrate including a counter electrode and a second alignment film disposed on the counter electrode; and
a liquid crystal layer provided between the first substrate and the second substrate,
wherein at least one of the first and second substrates includes a first film, a second film provided at a side of the first film that is a side facing the liquid crystal layer, a protective film provided at a side of the second film that is a side facing the liquid crystal layer, and a third film provided at a side of the protective film that is a side facing the liquid crystal layer,
the first film includes multiple first columns each having a major axis direction being a direction along a normal to the first and second substrates,
the second film includes multiple second columns each having a major axis direction inclining by a first angle with respect to the direction along the normal, and
the third film includes multiple third columns each having a major axis direction inclining by a second angle smaller than the first angle with respect to the direction along the normal, the third film being thinner than the second film in the direction along the normal.

7. The liquid crystal apparatus according to claim 6, wherein the first and second substrates each include the first film, the second film, the protective film, and the third film.

8. The liquid crystal apparatus according to claim 6, wherein the protective film contains silicon oxide.

9. The liquid crystal apparatus according to claim 6, wherein the third film is subjected to a surface treatment using a silane coupling agent.

10. The liquid crystal apparatus according to claim 6, wherein a film density of the third film is lower than a film density of the second film.

11. The liquid crystal apparatus according to claim 6, wherein a thickness of the protective film is greater than or equal to 5 Å but smaller than or equal to 14 Å.

12. An electro-optical apparatus comprising the liquid crystal apparatus according to claim 6.

## Amended claims

### Amended claims in accordance with Rule 137(2) EPC.

1. A method for manufacturing an inorganic alignment film (18, 22), the method comprising:
a first step (S1) of forming an electrode (15, 21) at a substrate (10s, 20s);
a second step (S2) of forming a first film (181, 221) by vapor deposition so as to cover the substrate (10s, 20s) and the electrode (15, 21), the first film (181, 221) having multiple first columns (C1) each having a major axis direction being a direction along a normal to the substrate (10s, 20s);
a third step (S3) of forming a second film (182, 222) on the multiple first columns (C1) by vapor deposition, the second film (182, 222) having multiple second columns (C2) each having a major axis direction that intersects at a first angle (θ1) with the direction along the normal;
a fourth step (54) of forming a protective film (184, 224) on the multiple second columns (C2) by atomic deposition; and
a fifth step (S5) of forming a third film (183, 223) on the protective film (184, 224) by vapor deposition, the third film (183, 223) having multiple third columns (C3) each having a major axis direction inclining by a second angle (θ2) smaller than the first angle (θ1) with respect to the direction along the normal, the third film (183, 223) being thinner than the second film (182, 222).

2. The method for manufacturing an inorganic alignment film (18, 22) according to claim 1, wherein the protective film (184, 224) contains silicon oxide.

3. The method for manufacturing an inorganic alignment film (18, 22) according to claim 1, further comprising a sixth step (S6) of subjecting the third film (183, 223) to a surface treatment using a silane coupling agent after the fifth step (S5).

4. The method for manufacturing an inorganic alignment film (18, 22) according to claim 1, wherein in the fifth step (S5), a film density of the third film (183, 223) is made lower than a film density of the second film (182, 222).

5. The method for manufacturing an inorganic alignment film (18, 22) according to claim 1, wherein in the fourth step (S4), a thickness of the protective film (184, 224) is set to a value greater than or equal to 5 Å but smaller than or equal to 14 Å.

6. A liquid crystal apparatus (100) comprising:
a first substrate (10) including pixel electrodes (15) and a first alignment film (18) disposed on the pixel electrodes (15);
a second substrate (20) including a counter electrode (21) and a second alignment film (22) disposed on the counter electrode (21); and
a liquid crystal layer (50) provided between the first substrate (10) and the second substrate (20),
wherein at least one of the first and second alignment films (18, 22) includes a first film (181, 221), a second film (182, 222) provided at a side of the first film (181, 221) that is a side facing the liquid crystal layer (50), a protective film (184, 224) provided at a side of the second film (182, 222) that is a side facing the liquid crystal layer (50), and a third film (183, 223) provided at a side of the protective film (184, 224) that is a side facing the liquid crystal layer (50),
the first film (181, 221) includes multiple first columns (C1) each having a major axis direction being a direction along a normal to the first and second substrates (10, 20),
the second film (182, 222) includes multiple second columns (C2) each having a major axis direction inclining by a first angle (θ1) with respect to the direction along the normal, and
the third film (183, 223) includes multiple third columns (C3) each having a major axis direction inclining by a second angle (θ2) smaller than the first angle (θ1) with respect to the direction along the normal, the third film (183, 223) being thinner than the second film (182, 222) in the direction along the normal.

7. The liquid crystal apparatus (100) according to claim 6, wherein the first and second alignment films (18, 22) each include the first film (181, 221), the second film (182, 222), the protective film (184, 224), and the third film (183, 223).

8. The liquid crystal apparatus (100) according to claim 6, wherein the protective film (184, 224) contains silicon oxide.

9. The liquid crystal apparatus (100) according to claim 6, wherein the third film (183, 223) is subjected to a surface treatment using a silane coupling agent.

10. The liquid crystal apparatus (100) according to claim 6, wherein a film density of the third film (183, 223) is lower than a film density of the second film (182, 222).

11. The liquid crystal apparatus (100) according to claim 6, wherein a thickness of the protective film (184, 224) is greater than or equal to 5 Å but smaller than or equal to 14 Å.

12. An electro-optical apparatus (1000) comprising the liquid crystal apparatus (100) according to claim 6.
